# EUROPEAN PATENT APPLICATION

(11) **EP 4 475 220 A1**
(43) Date of publication of application: **11.12.2024**
(21) Application number: 23794229.7
(22) Date of filing: 22.08.2023
(51) Int. Cl.: H01M 4/36, H01M 4/525, H01M 4/38

(54) **POSITIVE ELECTRODE COMPOSITE MATERIAL AND PREPARATION METHOD THEREFOR, POSITIVE ELECTRODE SHEET, AND BATTERY**

(30) Priority: 25.04.2023 CN 202310452631
(71) Applicant: Tianjin B&M Science And Technology Co., Ltd., Tianjin 300384 (CN)
(72) Inventor: LI, Honglei, Tianjin 300384 (CN); ZHANG, Haitian, Tianjin 300384 (CN); JI, Changyin, Tianjin 300384 (CN); LV, Fei, Tianjin 300384 (CN); XU, Ning, Tianjin 300384 (CN)
(74) Representative: Meroni, Francesca
(86) International application number: PCT/CN2023/114169
(87) International publication number: WO 2024/221659

(57) **Abstract**

The present disclosure relates to the technical field of lithium batteries, and in particular, to a composite cathode material and a preparation method therefor, a positive electrode plate, and a battery, to solve the problem of poor interface stability and structural stability between the coating layer and the bulk material in a related technology. The composite cathode material includes: a bulk material and a coating layer; the bulk material includes a material with a general formula of Li_{w}NiₐCo_{b}Mn_{c}X_{1-a-b-c}O₂, where X includes one or more of Al, Ti, Zr, Mg and W, 0.95<w<1.1, 0.6<a<l, b≥0, and c≥0; the material of the coating layer has a general formula of Li_{α}Ni_{β}Co_{γ}Mn_{δ}O₂, where 0<α<1, 0≤β≤0.6, 0≤γ≤1, 0<δ<1, and β, γ, and δ are not 0 at the same time; and the bulk material and the coating layer share a coherent interface.

## Description

### CROSS-REFERENCE TO RELATED APPLICATION

The present disclosure claims priority of Chinese Patent Application No. 202310452631.6 filed with Chinese Office Action on April 25, 2023 and entitled "COMPOSITE CATHODE MATERIAL AND PREPARATION METHOD THEREFOR, POSITIVE ELECTRODE PLATE, AND BATTERY", which is incorporated herein by reference in its entirety.

### TECHNICAL FIELD

The present disclosure relates to the technical field of lithium batteries, and in particular, to a composite cathode material and a preparation method therefor, a positive electrode plate, and a battery.

### BACKGROUND

In the context of carbon neutrality, the rapid development of the new energy vehicle industry has driven the rapid growth of power lithium-ion batteries.

The high-nickel layered cathode material has the advantages of high gram capacity, excellent cycle performance, lower production cost, and the like, and thus can achieve a single charging mileage of an electric vehicle of 300 km or more, and is widely concerned in the market. The high-nickel layered cathode material generally faces a problem of a complex electrode/electrolyte interface during practical application: in one aspect, there are many residual lithium compounds such as LiOH and Li₂CO₃ on the surface of the high-nickel layered cathode material, which easily increase the gelation and gas generation of electrode slurry; and in another aspect, when the high-nickel layered cathode material is in a highly charged state, the crystal structure is anisotropically shrunk or expanded due to H2→H3 phase transition, and mechanical stress is continuously accumulated at a grain boundary, which causes microcracks and particle breakage; and an electrolytic solution can penetrate into active particles along the cracks, and side reactions between high-activity Ni⁴⁺ in the high-nickel layered cathode material and the electrolyte are aggravated, finally causing the failure of the high-nickel layered cathode material.

A coating layer is prepared on the surface of the high-nickel layered cathode material (also called as a bulk material), so that the high-nickel layered cathode material can be separated from the electrolytic solution, the reactivity therebetween is reduced, and the coating layer can also prevent irreversible phase change from a layered structure to an unordered spinel and halite structure caused by side reactions of highly oxidized Ni⁴⁺ and the electrolyte in a highly delithiated state, so that the cycle life of the cathode material is prolonged. However, the current coating layer material is an electrochemically inert compound, or although the coating layer material has electrochemical characteristics, the coating layer material and the bulk material are physically bonded to each other and are easily dissociated or shed during charging and discharging, consequently, there is still a problem of poor interface stability between the bulk material and the electrolytic solution.

### SUMMARY

Based on this, the present disclosure provides a composite cathode material and a preparation method therefor, a positive electrode plate, and a battery, which are used to solve the problems of poor interface stability and structural stability between a coating layer and a bulk material in a related technology.

In a first aspect, a composite cathode material is provided, including a bulk material and a coating layer;
the bulk material includes a material with a general formula of Li_{w}NiₐCo_{b}Mn_{c}X_{1-a-b-c}O₂, where X includes one or more of Al, Ti, Zr, Mg and W, 0.95≤w≤1.1, 0.6<a<l, b≥0, and c≥0;
the coating layer includes a material with a general formula of Li_{α}Ni_{β}Co_{γ}Mn_{δ}O₂, where 0<a< 1, 0≤β≤0.6, 0≤γ≤1, 0≤δ≤1, and β, γ, and δ are not 0 at the same time; and
the bulk material and the coating layer share a coherent interface.

Optionally, in the crystal structures of both the bulk material and the coating layer material, oxygen ions are in a close-packed structure;
and/or,
a space group to which the material of the coating layer belongs is one or more of *Fd-3m, Fm-3m, R-3m,* and *C2*/*m.*

Optionally, the coating layer has a thickness less than or equal to 200 nm.

In a second aspect, a preparation method for the composite cathode material according to the first aspect is provided, including:
preparing or providing the bulk material; and
mixing the bulk material with a coating additive, and preparing the composite cathode material through a topological transformation reaction.

Optionally, the mixing the bulk material with a coating additive and preparing the composite cathode material through a topological transformation reaction includes:
mixing the bulk material and the coating additive; and
performing step-by-step calcination on a mixture obtained by mixing the two, to prepare the composite cathode material,
where the step-by-step calcination includes two steps of calcination, a first step of calcination is performed at a temperature of 400-600 °C for 1-5 h, a second step of calcination is performed at a temperature of 600-800 °C for 3-10 h, and the step-by-step calcination is performed in an oxygen-containing atmosphere.

The coating additive includes a first precursor and a reaction aid, the first precursor includes: one of NiₓCo_{y}Mn_{z}(OH)₂, NiₓCo_{y}Mn_{z}OOH, and NiₓCo_{y}Mn_{z}O, where 0≤x≤0.6, 0≤y≤1, 0 <z<1, x, γ and z are not 0 at the same time, and the reaction aid includes one or more of lithium carbonate, lithium oxide, and lithium hydroxide;
optionally, in the step-by-step calcination, the first precursor is in an oxygen close-packed structure, and the space group includes one or more of *Fd-3m, Fm-3m, R-3m,* and *C2*/*m*;
optionally, the first precursor satisfies one of the following conditions:
   (1) the first precursor has a specific surface area that is greater than or equal to 20 m²/g;
   (2) a molar ratio of the first precursor to the bulk material is 0.5 mol% to 10 mol%; and
   (3) a total number of metal atoms in the first precursor is M, a total number of lithium atoms in the reaction aid and in residual lithium of the bulk material is L, and the M and the L satisfy 0.8<L/M<1.2.

Optionally, the preparing the bulk material includes:
in the oxygen-containing atmosphere, mixing a high-nickel material precursor with a lithium salt, heating and calcining, then cooling along with a furnace, and crushing and sieving;
optionally, the preparing the bulk material satisfies at least one of the following conditions:
   (1) the high-nickel material precursor includes: one or more of an oxide and a hydroxide;
   (2) the lithium salt includes one or more of lithium carbonate and lithium hydroxide;
   (3) a molar ratio of the high-nickel material precursor to lithium atoms in the reaction aid is 1.0:(0.9-1.1); and
   (4) a heating rate is 2-8 °C/min, and the calcination is performed at a temperature of 700-1100 °C for 12-24 h.

In a third aspect, a positive electrode plate is provided, including: a positive current collector, and a positive electrode material layer formed on at least one surface of the positive current collector; and
the positive electrode material layer includes the composite cathode material according to the first aspect or the composite cathode material prepared by the preparation method according to the second aspect.

In a fourth aspect, a battery is provided, including: the positive electrode plate according to the third aspect.

Compared with the prior art, the present disclosure has the following beneficial effects:
the coating layer is formed on the surface of the high-nickel layered cathode material (namely, the bulk material), and the coating layer has good electrochemical activity, so that the battery capacity loss caused by adopting an inert coating layer in the related technology can be effectively reduced, and meanwhile, the bulk material and the coating layer share a coherent interface, therefore, in one aspect, the coating layer and the bulk material are chemically combined with each other, which effectively improves the combination stability between the coating layer and the bulk material; and in another aspect, the bulk material and the coating layer share a coherent interface, so that the interface stability and the structural stability between the coating layer and the bulk material can be effectively improved, thus the coating layer can alleviate the stress accumulation of the high-nickel layered cathode material in the battery cycle process, and avoid the direct contact between the high-nickel layered cathode material and an electrolyte, which can effectively inhibit the side reaction between Ni⁴⁺ on the surface of the high-nickel layered cathode material and the electrolyte, and further effectively improve the battery cycle performance; and in still another aspect, the formation of the coating layer can consume the residual lithium compound on the surface of the high-nickel layered cathode material, thereby reducing the residual lithium compound on the surface of the high-nickel layered cathode material and further effectively reducing the gas generation of the battery. The problem of poor interface stability and structural stability between the coating layer and the bulk material in a related technology is solved.

### BRIEF DESCRIPTION OF DRAWINGS

FIG. 1 shows ex-situ XRD patterns of a high-nickel layered cathode material under different temperature conditions in the S3 process according to an embodiment of the present disclosure;
FIG. 2 is a comparison graph showing changes in specific capacities of Example 1, when not coated and after coated, with a number of cycles according to an embodiment of the present disclosure; and
FIG. 3 is a comparison graph showing differential scanning calorimetry curves of Example 1, when not coated and after coated, according to an embodiment of the present disclosure.

### DETAILED DESCRIPTION OF EMBODIMENTS

The present disclosure will be further described in detail with reference to specific embodiments. The present discourse may be embodied in many different forms and is not limited to the implementations described herein. Rather, these implementations are provided so that the present disclosure will be understood thoroughly and completely.

Unless otherwise defined, all technical and scientific terms used in the present disclosure have same meanings as those usually understood by those skilled in the art of the present disclosure. The terminology used in the description of the present disclosure herein is for the purpose of describing specific embodiments only and is not intended to limit the present disclosure. The term "and/or" as used herein includes any or all combinations of one or more related listed items.

The determination of the surface residual alkali in the present disclosure is performed according to GB/T41704-2022.

Based on the above technical problem, some embodiments of the present disclosure provide a composite cathode material, including: a bulk material and a coating layer; the bulk material includes a material with a general formula of Li_{w}N1ₐCo_{b}Mn_{c}X_{1-a-b-c}O₂, where X includes one or more of Al, Ti, Zr, Mg and W, 0.95≤w≤1.1, 0.6≤a≤1, b≥0, and c≥0; the coating layer includes a material with a general formula of Li_{α}Ni_{β}Co_{γ}Mn_{δ}O₂, where 0<α≤1, 0≤0≤0.6, 0≤γ≤1, 0≤δ≤1, and β, γ, and δ are not 0 at the same time; and the bulk material and the coating layer share a coherent interface.

In the above, the bulk material is a high-nickel layered cathode material, the coating layer material is a low-nickel material, and meanwhile, the coating layer material includes elements with good electrochemical activity, such as Ni, Co and/or Mn, and the like, so that the coating layer material has high electrochemical activity.

Most crystal materials are composed of many grains, and an interface between grains that belong to the same solid phase but differ in phase is called a grain boundary. In the crystal structure, if the structures of two grains are different, it is called that the two grains with different structures have crystal phases with different structures, and an interface between the two phases with different structures is called a phase boundary. A coherent interface (phase boundary) means that the atoms on the interface are located at the junctions of the two-phase lattices at the same time, that is, the lattices of the two phases are connected to each other, and the atoms on the interface are common to both. Here, the bulk material and the coating layer share a coherent interface, which means that the bulk material and the coating layer have different crystal structures, and atoms on the interface between the two different crystal structures are shared by both the bulk material and the coating layer.

According to the composite cathode material provided by an embodiment of the present disclosure, the coating layer is formed on the surface of the high-nickel layered cathode material (namely, the bulk material), and the coating layer has good electrochemical activity, so that the battery capacity loss caused by adopting an inert coating layer in the related technology can be effectively reduced, and meanwhile, the bulk material and the coating layer share a coherent interface, therefore, in one aspect, the coating layer and the bulk material are chemically combined with each other, which effectively improves the combination stability between the coating layer and the bulk material; in another aspect, the bulk material and the coating layer share a coherent interface, so that the interface stability and the structural stability between the coating layer and the bulk material can be effectively improved, and the coating layer can alleviate the stress accumulation of the high-nickel layered cathode material in the battery cycle process, and avoid the direct contact between the high-nickel layered cathode material and an electrolyte, which can effectively inhibit the side reaction between Ni⁴⁺ on the surface of the high-nickel layered cathode material and the electrolyte, and further effectively improve the battery cycle performance; and in still another aspect, the formation of the coating layer can consume the residual lithium compound on the surface of the high-nickel layered cathode material, thereby reducing the residual lithium compound on the surface of the high-nickel layered cathode material and further effectively reducing the gas generation of the battery. The problem of poor interface stability and structural stability between the coating layer and the bulk material in a related technology is solved.

In some embodiments, in the crystal structures of both the bulk material and the coating layer, oxygen ions are in a close-packed structure; and/or, a space group to which the coating layer belongs is one or more of *Fd-*3*m, Fm-*3*m, R*-3*m,* or *C2*/*m.*

The space group to which the coating layer belongs is one or more of *Fd-*3*m, Fm-*3*m, R*-3*m,* or *C2*/*m,* enabling that the coating layer and the bulk material share a coherent interface.

In some embodiments, the coating layer has a thickness less than or equal to 200 nm.

In these embodiments, by controlling the thickness of the coating layer to be less than or equal to 200 nm, the coating layer can be coated on the surface of the bulk material in a thin and uniform manner, so as to both achieve the purpose of preventing the high-nickel layered cathode material from being attacked by electrolyte to inhibit side reactions, and reduce the obstruction to the diffusion of lithium in the de-intercalation process.

Some embodiments of the present disclosure provide a preparation method for the composite cathode material described above, including:
preparing or providing the bulk material; and
mixing the bulk material with a coating additive, and preparing the composite cathode material through a topological transformation reaction.

The topological chemical reaction means that, in the chemical reaction, the structure of a product has a certain relationship with the structure of a reactant, and the reaction can be performed under the condition of keeping a certain crystal structure of the reactant.

According to the preparation method of the composite cathode material provided by an embodiment of the present disclosure, in one aspect, the coherent coating layer with a good stable structure can be formed in situ by using the residual lithium compound on the surface of the high-nickel layered cathode material, so that the residual lithium compound on the surface of the bulk material can be effectively reduced, and the gas generation of a battery is reduced; in addition, by using the coating additive containing elements with higher electrochemical activity such as Ni, Co and Mn, the higher reaction activity enables that the lithium compound residue on the surface of the bulk material can be more effectively consumed; and in another aspect, in the multi-step topological chemical reaction, by means of the synergistic effect of the first precursor and the reaction aid, a secondary calcination standard is regulated and controlled, the eutectic lattice growth of the coating layer on the surface of a primary calcined product A is achieved through the continuous topological transformation of the close-packed structure of the oxygen ions, the diffusion effect of the metal ions to the body phase is reduced, and the finally obtained coherent coating layer can effectively improve the interface stability and the structural stability between the coating layer and the bulk material; therefore, the stress accumulation of the high-nickel layered cathode material in the battery cycle process can be alleviated, the direct contact between the high-nickel layered cathode material and the electrolyte is avoided, the side reaction between Ni⁴⁺ on the surface of the high-nickel layered cathode material and the electrolyte can be effectively inhibited, and further the battery cycle performance can be effectively improved.

In some embodiments, the mixing the bulk material with a coating additive and preparing the composite cathode material through a topological transformation reaction includes:
mixing the bulk material and the coating additive; and
performing step-by-step calcination on a mixture obtained by mixing the two, to prepare the composite cathode material.

In the above, the specific spatial structure of the coating additive in the calcination step and the calcination condition are not specifically limited, as long as the coating additive and the residual lithium compound of the bulk material can generate multi-step topological transformation based on an oxygen close-packed structure in the whole calcination process to generate a coherent coating layer of the high-nickel layered cathode material.

The step-by-step calcination includes two steps of calcination, a first step of calcination is performed at a temperature of 400-600 °C for 1-5 h, a second step of calcination is performed at a temperature of 600-800 °C for 3-10 h, and the step-by-step calcination is performed in an oxygen-containing atmosphere.

In these embodiments, by controlling that in the step-by-step calcination, the first precursor is in an oxygen close-packed structure and the space group includes one or more of *Fd*-3*m, Fm*-3*m, R*-3*m,* and *C2*/*m,* the coating layer is made to form a coherent interface with the bulk material in the form of a common oxygen lattice, to form the coherent coating layer. By limiting the temperature and time of the step-by-step calcination to the above ranges, it is possible to make the coating additive and the residual lithium compound on the surface of the bulk material undergo multi-step topological transformation based on an oxygen close-packed structure, so that a coherent coating layer having excellent properties is generated.

In the above, the oxygen-containing atmosphere may include: one or more of oxygen gas and dry air.

In some embodiments, the coating additive includes a first precursor and a reaction aid, the first precursor includes: one of NiₓCo_{y}Mn_{z}(OH)₂, NiₓCo_{y}Mn_{z}OOH, and NiₓCo_{y}Mn_{z}O, where 0≤x≤0.6, 0≤y≤1, 0 <z<1, x, and z are not 0 at the same time, and the reaction aid includes one or more of lithium oxide, lithium carbonate, and lithium hydroxide.

In some embodiments, the first precursor satisfies one of the following conditions:
(1) the first precursor has a specific surface area that is greater than or equal to 20 m²/g;
(2) a molar ratio of the first precursor to the bulk material is 0.5 mol% to 10 mol%; and
(3) a total number of metal atoms in the first precursor is M, a total number of lithium atoms in the reaction aid and in residual lithium of the bulk material is L, and the M and the L satisfy 0.8<L/M<1.2.

In these embodiments, a particle size of the first precursor above may be in a micron level, which may effectively improve the integrity of the coating layer preparation. By controlling a molar ratio of the first precursor to the bulk material to be 0.5:100 to 10:100, the components and content of the coating layer may be optimized; and by controlling a total number of lithium atoms in the reaction aid and residual lithium atoms in the bulk material to be L, and the L and a total number M of metal atoms of the first precursor satisfies 0.8<L/M<1.2, so that the topological chemical reaction can be thorough and controllable, the smooth proceeding of the multi-step topological chemical reaction can be ensured, and the generation of a coherent interface can be ensured.

In some embodiments, the preparing the bulk material includes:
in the oxygen-containing atmosphere, mixing a high-nickel material precursor with a lithium salt, heating and calcining, then cooling along with a furnace, and crushing and sieving the mixture;
optionally, the preparing the bulk material satisfies one of the following conditions:
   (1) the high-nickel material precursor includes: one or more of an oxide and a hydroxide;
   (2) the lithium salt includes one or more of lithium carbonate and lithium hydroxide;
   (3) a molar ratio of the high-nickel material precursor to lithium atoms in the reaction aid is 1.0:(0.9-1.1); and
   (4) a heating rate is 2-8 °C/min, and the calcination is performed at a temperature of 700-1100 °C for 12-24 h.

Some embodiments of the present disclosure provide a positive electrode plate, including: a positive current collector and a positive electrode material layer formed on the positive current collector, where the positive electrode material layer includes: the composite cathode material described above or the composite cathode material prepared by the preparation method described above.

The beneficial technical effects of the positive electrode plate provided by an embodiment of the present disclosure are the same as those of the composite cathode material provided by an embodiment of the present disclosure, which are not described herein again.

Some embodiments of the present disclosure provide a battery, including: the positive electrode plate described above.

In the above, the battery may be exemplarily a lithium-ion battery.

The beneficial technical effects of the battery provided by an embodiment of the present disclosure are the same as those of the high-nickel composite cathode material modified based on the topological transformation reaction, provided by an embodiment of the present disclosure, which are not described herein again.

To objectively evaluate the technical effects of the embodiments of the present disclosure, hereinafter, the present disclosure will be illustrated in detail through examples and comparative examples.

In the following examples and comparative examples, all raw materials are commercially available, and to maintain the reliability of the experiment, the raw materials used in the following examples and comparative examples all have the same physical and chemical parameters or are subjected to the same treatment.

### Example 1

S1: mixing 1000 g of Ni_{0.92}Co_{0.04}Mn_{0.03}Al_{0.01}(OH)₂ (with D50 of 3.5 µm and a specific surface area of 20 m²/g) and 470 g of LiOH·H₂O uniformly by a high-speed mixer, placing the mixture in a furnace having an oxygen atmosphere, heating to 810 °C at a heating rate of 3 °C/min, keeping the temperature for 15 h, cooling along with the furnace, crushing and sieving the mixture to obtain a primary calcined product (namely, the bulk material) that was not coating-modified. A content test was performed on the residual lithium compound on the surface of the primary calcined product to obtain that in the residual lithium compound, the content of LiOH in the primary calcined product was 5200 ppm and the content of Li₂CO₃ in the primary calcined product was 2700 ppm. All tests are performed based on national standards.

S2: uniformly mixing 500 g of the primary calcined product with 1.675 g of Li₂O and 23.390 g of the first precursor Co_{0.5}Mn_{0.5}(OH)₂ (with a specific surface area of 25 m²/g) to obtain a mixture obtained by the two, where an amount of Co_{0.5}Mn_{0.5}(OH)₂ satisfied that: a molar ratio of Co_{0.5}Mn_{0.5}(OH)₂ to the primary calcined product was 5:100, a number of metal atoms in the first precursor Co_{0.5}Mn_{0.5}(OH)₂ was M, a total number of lithium atoms in the reaction aid Li₂O and in the residual lithium in the primary calcined product was L, and L/M was 1.0.

S3: performing step-by-step calcination on the mixture obtained by the two in oxygen gas again, where a first step of calcination was performed at a temperature I of 450 °C for 2 h, and a second step of calcination was performed at a temperature II of 720 °C for 8 h; and then cooling along with the furnace after calcination, to obtain a coating-modified material LiNi_{0.92}Co_{0.04}Mn_{0.03}Al_{0.01}O₂ represented by a chemical formula of 0.05 LiCo_{0.5}Mn_{0.5}O₂@LiNi_{0.92}Co_{0.04}Mn_{0.03}Al_{0.01}O₂.

### Example 2

S1: mixing 1000 g of Ni_{0.90}Co_{0.06}Mn_{0.03}Al_{0.01}(OH)₂ (with D50 of 13.0 µm and a specific surface area of 6 m²/g) and 455 g of LiOH·H₂O uniformly by a high-speed mixer, placing the mixture in a furnace having an oxygen atmosphere, heating to 775 °C at a heating rate of 4 °C/min, keeping the temperature for 16 h, cooling along with the furnace, crushing and sieving the mixture to obtain a primary calcined product that was not coating-modified. A content test was performed on the residual lithium compound on the surface of the primary calcined product to obtain that in the residual lithium compound, the content of LiOH·H₂O in the primary calcined product was 4800 ppm and the content of Li₂CO₃ in the primary calcined product was 3700 ppm.

S2: uniformly mixing 500 g of the primary calcined product with 0.170 g of LiOH·H₂O and 11.820 g of the first precursor CoOOH (with a specific surface area of 55 m²/g) to obtain a mixture obtained by the two, where an amount of CoOOH satisfied that: a molar ratio of CoOOH to the primary calcined product was 2.5:100, a number of metal atoms in the first precursor CoOOH was M, a total number of lithium atoms in the reaction aid LiOH·H₂O and in the residual lithium of the primary calcined product was L, and L/M was 1.1.

S3: performing step-by-step calcination on the mixture obtained by the two in oxygen gas again, where a first step of calcination was performed at a temperature I of 450 °C for 3 h, and a second step of calcination was performed at a temperature II of 750 °C for 6 h; and then cooling along with the furnace after calcination, to obtain a coating-modified material LiNi_{0.90}Co_{0.06}Mn_{0.03}Al_{0.01}O₂ represented by a chemical formula of 0.025 Li_{0.9}CoO₂@ Li_{1.005}Ni_{0.90}Co_{0.06}Mn_{0.03}Al_{0.01}O₂.

### Example 3

S1: mixing 1000 g of Ni_{0.92}Co_{0.05}Mn_{0.02}Zr_{0.01}(OH)₂ (with D50 of 3.3 µm and a specific surface area of 18 m²/g) and 450 g of LiOH·H₂O uniformly by a high-speed mixer, placing the mixture in a furnace having an oxygen atmosphere, heating to 700 °C at a heating rate of 2 °C/min, keeping the temperature for 12 h, cooling along with the furnace, crushing and sieving the mixture to obtain a primary calcined product that is not coating-modified. A content test was performed on the residual lithium compound on the surface of the primary calcined product to obtain that in the residual lithium compound, the content of LiOH·H₂O in the primary calcined product was 5300 ppm and the content of Li₂CO₃ in the primary calcined product was 3700 ppm.

S2: uniformly mixing 500 g of the primary calcined product with 11.614 g of a first precursor Co_{0.33}Ni_{0.33}Mn_{0.33}(OH)₂ (with a specific surface area of 30 m²/g) to obtain a mixture obtained by the two, where no reaction aid was added, where an amount of Co_{0.33}Ni_{0.33}Mn_{0.33}(OH)₂ satisfied that: a molar ratio of Co_{0.33}Ni_{0.33}Mn_{0.33}(OH)₂ to the primary calcined product was 2.5:100, a number of metal atoms of the first precursor Co_{0.33}Ni_{0.33}Mn_{0.33}(OH)₂ was M, a number of lithium atoms of the residual lithium of the primary calcined product was L, and L/M was 1.1.

S3: performing step-by-step calcination on the mixture obtained by the two in oxygen gas again, where a first step of calcination was performed at a temperature I of 400 °C for 4 h, and a second step of calcination is performed at a temperature II of 800 °C for 10 h; and then cooling along with the furnace after calcination, to obtain a coating-modified material LiNi_{0.92}Co_{0.05}Mn_{0.02}Zr_{0.01}O₂ represented by a chemical formula of 0.025 Li0.7Co0.33Ni0.33Mn0.33O2@Li0.95Ni0.92Co0.05Mn0.02Zr0.01O2.

### Example 4

S1: mixing 1000 g of Ni_{0.83}Co_{0.11}Mn_{0.05}W_{0.01}(OH)₂ (with D50 of 10.5 µm and a specific surface area of 8 m²/g) and 480 g of LiOH·H₂O uniformly by a high-speed mixer, placing the mixture in a furnace having an oxygen atmosphere, heating to 1100 °C at a heating rate of 8 °C/min, keeping the temperature for 24 h, then cooling along with the furnace, crushing and sieving the mixture to obtain a primary calcined product that was not coating-modified. A content test was performed on the residual lithium compound on the surface of the primary calcined product to obtain that in the residual lithium compound, the content of LiOH·H₂O in the primary calcined product was 5400 ppm and the content of Li₂CO₃ in the primary calcined product was 5200 ppm.

S2: uniformly mixing 500 g of the primary calcined product with 0.292 g of Li₂O and 23.002 g of the first precursor Co_{0.5}Mn_{0.5}(OH)₂ (with a specific surface area of 25 m²/g) to obtain a mixture obtained by the two, where an amount of Co_{0.5}Mn_{0.5}(OH)₂ satisfied that: a molar ratio of Co_{0.5}Mn_{0.5}(OH)₂ to the primary calcined product was 5:100, a number of metal atoms in the first precursor Co_{0.5}Mn_{0.5}(OH)₂ was M, a total number of lithium atoms in the reaction aid Li₂O and in the residual lithium of the primary calcined product was L, and L/M was 0.85.

S3: performing step-by-step calcination on the mixture obtained by the two in oxygen gas again, where a first step of calcination was performed at a temperature I of 600 °C for 5 h, and a second step of calcination is performed at a temperature II of 600 °C for 3 h; and then cooling along with the furnace after calcination, to obtain a coating-modified material LiNi_{0.83}Co_{0.11}Mn_{0.05}W_{0.01}O₂ represented by a chemical formula of 0.05 Li_{0.85}Co_{0.5}Mn_{0.5}O₂@LiNi_{0.83}Co_{0.11}Mn_{0.05}W_{0.01}O₂.

### Example 5

S1: mixing 1000 g of Ni_{0.68}Co_{0.12}Mn_{0.195}Al_{0.005}(OH)₂ (with D50 of 3.8 µm and a specific surface area of 22 m²/g) and 495 g of LiOH-EhO uniformly by a high-speed mixer, placing the mixture in a furnace having a dry air atmosphere, heating to 920 °C at a heating rate of 4 °C/min, keeping the temperature for 18 h, then cooling along with the furnace, crushing and sieving the mixture to obtain a primary calcined product that was not coating-modified. A content test was performed on the residual lithium compound on the surface of the primary calcined product, to obtain that in the residual lithium compound, the content of LiOH in the primary calcined product was 3700 ppm and the content of Li₂CO₃ in the primary calcined product is 2900 ppm.

S2: uniformly mixing 500 g of the primary calcined product with 7.523 g of Li₂O and 48.026 g of the first precursor Co(OH)₂ (with a specific surface area of 35 m²/g) to obtain a mixture obtained by the two, where an amount of Co(OH)₂ satisfied that: a molar ratio of Co(OH)₂ to the primary calcined product was 10:100, a number of metal atoms in the first precursor Co(OH)₂ was M, a total number of lithium atoms in the reaction aid Li₂O and in the residual lithium of the primary calcined product was L, and L/M was 1.1.

S3: performing step-by-step calcination on the mixture obtained by the two in dry air again, where a first step of calcination was performed at a temperature I of 500 °C for 1 h, and a second step of calcination was performed at a temperature II of 600 °C for 3 h; and then cooling along with the furnace after calcination, to obtain a coating-modified material LiNi_{0.68}Co_{0.12}Mn_{0.195}Al_{0.005}O₂ represented by a chemical formula of 0.1 Li_{0.3}CoO₂@Li_{1.08}Ni_{0.68}Co_{0.12}Mn_{0.195}Al_{0.005}O₂.

### Example 6

S1: mixing 1000 g of Ni_{0.90}Co_{0.05}Mn_{0.04}Mg_{0.01}(OH)₂ (with D50 of 3.0 µm and a specific surface area of 25 m²/g) and 455 g of LiOH·H₂O uniformly by a high-speed mixer, placing the mixture in a furnace having a dry air atmosphere, heating to 800 °C at a heating rate of 5 °C/min, keeping the temperature for 15 h, then cooling along with the furnace, crushing and sieving the mixture to obtain a primary calcined product that was not coating-modified. A content test was performed on the residual lithium compound on the surface of the primary calcined product to obtain that in the residual lithium compound, content of LiOH·H₂O in the primary calcined product was 6200 ppm and the content of Li₂CO₃ in the primary calcined product was 4200 ppm.

S2: uniformly mixing 500 g of the primary calcined product with 4.493 g of LiOH·H₂O and 27.765 g of the first precursor Coo.sMno.sOOH (with a specific surface area of 30 m²/g) to obtain a mixture obtained by the two, where an amount of Coo.sMno.sOOH satisfied that: a molar ratio of Coo.sMno.sOOH to the primary calcined product was 6:100, a number of metal atoms in the first precursor Coo.sMno.sOOH was M, a total number of lithium atoms in the reaction aid LiOH·H₂O and in the residual lithium of the primary calcined product was L, and L/M was 0.95.

S3: performing step-by-step calcination on the mixture obtained by the two in dry air again, where a first step of calcination was performed at a temperature I of 450 °C for 5 h, and a second step of calcination was performed at a temperature II of 750 °C for 8 h; and then cooling along with furnace after calcination to obtain a coating-modified material LiNi_{0.90}Co_{0.05}Mn_{0.04}Mg_{0.01}O₂ represented by a chemical formula 0.06 Li_{0.45}Co_{0.5}Mn_{0.5}O₂@Li_{1.03}Ni_{0.90}Co_{0.05}Mn_{0.04}Mg_{0.01}O₂.

### Example 7

S1: mixing 1000 g of Ni_{0.88}Co_{0.06}Mn_{0.05}Zr_{0.01}(OH)₂ (with D50 of 8.5 µm and a specific surface area of 22 m²/g) and 480 g of LiOH·H₂O uniformly by a high-speed mixer, placing the mixture in a furnace at a dry air atmosphere, heating to 815 °C at a heating rate of 5 °C/min, keeping the temperature for 15 h, then cooling along with the furnace, crushing and sieving the mixture to obtain a primary calcined product that was coating-modified. A content test was performed on the residual lithium compound on the surface of the primary calcined product to obtain that in the residual lithium compound, the content of LiOH·H₂O in the primary calcined product was 6400 ppm and the content of Li₂CO₃ in the primary calcined product was 5500 ppm.

S2: mixing 500 g of the primary calcined product with 5.755 g of LiOH·H₂O and 27.974 g of the first precursor Co_{0.33}Ni_{0.33}Mn_{0.33}O (with a specific surface area of 35 m²/g) to obtain a mixture obtained by the two, where an amount of Co_{0.33}Ni_{0.33}Mn_{0.33}O satisfied that: a molar ratio of Co_{0.33}Ni_{0.33}Mn_{0.33}O to the primary calcined product was 7.5:100, a number of metal atoms in the first precursor Co_{0.33}Ni_{0.33}Mn_{0.33}O is M, a total number of lithium atoms in the reaction aid LiOH·H₂O and in the residual lithium of the primary calcined product was L, and L/M was 0.9.

S3: performing step-by-step calcination on the mixture obtained by the two in dry air again, where a first step of calcination was performed at a temperature I of 400 °C for 4 h, and a second step of calcination was performed at a temperature II of 700 °C for 8 h; and then cooling along with furnace after calcination to obtain a coating-modified material LiNi_{0.88}Co_{0.06}Mn_{0.05}Zr_{0.01}O₂ represented by a chemical formula of 0.075 Li_{0.9}Co_{0.33}Ni_{0.33}Mn_{0.33}O₂@LiNi_{0.88}Co_{0.06}Mn_{0.05}Zr_{0.01}O₂.

### Comparative Example 1

In Comparative Example 1, the steps S1 and S3 are the same as those in Example 1, and S2 includes: mixing 500 g of the primary calcined product with 1.675 g of Li₂O and 23.390 g of the first precursor Co_{0.}5MnO_{.5}(OH)₂ (with a specific surface area of 15 m²/g) uniformly to obtain a mixture obtained by the two, where an amount of Co_{0.5}Mn_{0.5}(OH)₂ satisfied that: a molar ratio of Co_{0.5}Mn_{0.5}(OH)₂ to the primary calcined product was 5:100, a number of metal atoms in the first precursor Co_{0.5}Mn_{0.5}(OH)₂ was M, a total number of lithium atoms of the reaction aid Li20 and in the residual lithium of the primary calcined product was L, and L/M was 1.0.

### Comparative Example 2

In Comparative Example 2, the steps S1 and S3 are the same as those in Example 1, and S2 includes: mixing 500 g of the primary calcined product with 23.390 g of the first precursor Co_{0.5}Mn_{0.5}(OH)₂ (with a specific surface area of 25 m²/g) to obtain a mixture obtained by the two, where no reaction aid was added, where an amount of Co_{0.5}Mn_{0.5}(OH)₂ satisfied that: a molar ratio of Co_{0.5}Mn_{0.5}(OH)₂ to the primary calcined product was 5:100, a number of metal atoms of the first precursor Co_{0.33}Ni_{0.33}Mn_{0.33}(OH)₂ was M, a number of lithium atoms of the residual lithium in the primary calcined product was L, and L/M was about 0.5.

### Comparative Example 3

In Comparative Example 3, the steps S1 and S3 are the same as those in Example 1, and S2 includes: mixing 500 g of the primary calcined product with 3.596 g of Li₂O and 23.390 g of the first precursor Co_{0.5}Mn_{0.5}(OH)₂ (with a specific surface area of 25 m²/g) to obtain a mixture obtained by the two, where an amount of Co_{0.5}Mn_{0.5}(OH)₂ satisfied that: a molar ratio of Co_{0.5}Mn_{0.5}(OH)₂ to the primary calcined product was 5:100, a number of metal atoms in the first precursor Co_{0.5}Mn_{0.5}(OH)₂ was M, a total number of lithium atoms in the reaction aid Li₂O and in the residual lithium of the primary calcined product was L, and L/M was 1.5.

### Comparative Example 4

In Comparative Example 4, the steps S1 and S2 are the same as those in Example 1, and S3 includes: calcining the mixture obtained by the two in oxygen gas again at a calcining temperature of 720 °C for 12 h.

In the above, Comparative Example 1 differs from Example 1 in that: the first precursor used in Comparative Example 1 has a small specific surface area and poor reaction activity, consequently, the obtained modified material does not have a complete coating layer, and the residual lithium compound on the surface of the bulk material is not significantly improved.

Comparative Example 2 differs from Example 1 in that: in Comparative Example 2, only the residual lithium compound on the surface of the bulk material is used as the reaction aid, and no additional reaction aid is added, consequently, the amount of lithium salt in the coating additive is low, resulting in that the topological transformation reaction is incomplete, and the coating layer in the obtained modified material is not in an oxygen close-packed structure, and no coherent interface is generated.

Comparative Example 3 differs from Example 1 in that: in the coating additive used in Comparative Example 3, the amount of the lithium salt is high, which leads to the uncontrolled topological transformation reaction, consequently, the coating layer in the obtained modified material is not in an oxygen close-packed structure, no coherent interface is generated, and the residual lithium content on the surface of the primary calcined product is too high, which easily causes gas generation of the battery.

Comparative Example 4 differs from Example 1 in that: the calcination of the mixture obtained by the two in Comparative Example 4 is changed into one-step calcination, which causes incomplete topological transformation reaction, and the too long high-temperature calcination causes the metal ion diffusion effect to be intensified; consequently, the obtained modified material has no obvious surface coating layer, and therefore, no coherent interface is generated in the modified material.

### Test Example

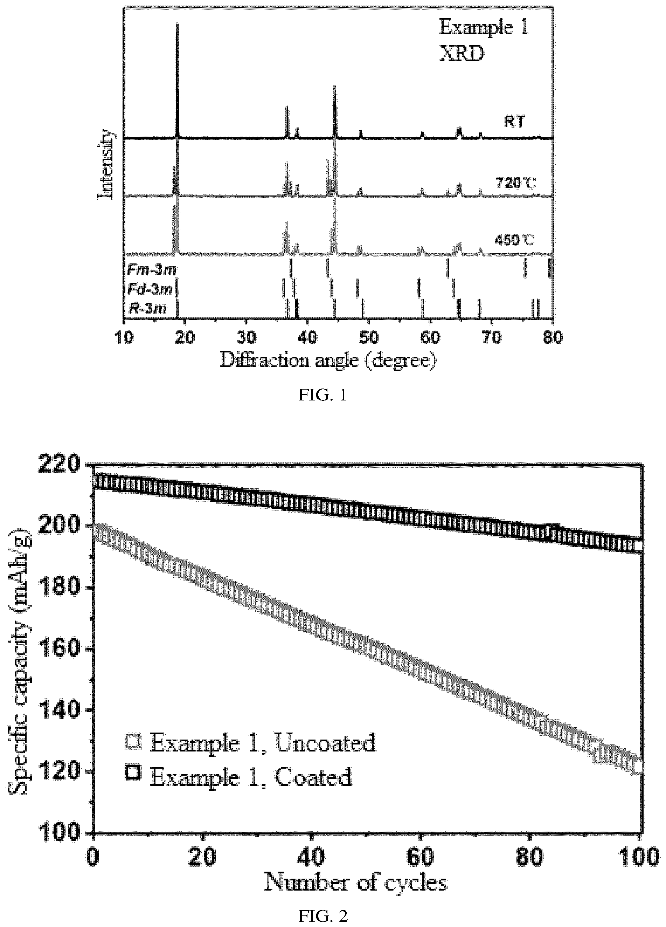

1. Ex-situ XRD tests are performed on the high-nickel layered cathode material (namely, the bulk material) in different temperature states in the S3 process of Example 1, and the obtained ex-situ XRD patterns of the high-nickel layered cathode material are as shown in FIG 1. In FIG. 1, at 450 °C, XRD peaks mainly indicate an R-3m structure of the bulk material, and part of impurity peaks correspond to Fd-3m phases of a spinel structure; at 720 °C, XRD peaks still mainly indicate an R-3m structure of the bulk material, and part of impurity peaks correspond to Fd-3m phase of a spinel structure and Fm-3m phase of a halite structure; and after being cooling to room temperature RT along with the furnace, the material is completely transformed into an R-3m structure.
2. Electrochemical performance test:
   (1) Preparing a positive electrode plate and a lithium ion battery included:
      mixing the modified materials prepared in Examples 1 to 7 and Comparative Examples 1 to 4 with acetylene black and polyvinylidene fluoride in a mass ratio of 90:5:5, adding a proper amount of N-methylpyrrolidone as a dispersing agent, and grinding into a slurry; and then uniformly coating the slurry on an aluminum foil, vacuum drying at 120 °C for 12 h, rolling the dried electrode plate by using a rolling machine, cutting the aluminum foil by using a slicing machine to obtain a circular electrode plate with a diameter of 10 mm, with a loading capacity of the active material controlled at about 12 mg.cm⁻²; and
      then, assembling a half-cell in a glove box having an argon atmosphere, with the water partial pressure controlled ≤ 0.1 ppm, the oxygen partial pressure controlled ≤ 0.1 ppm, the metal lithium used as a counter electrode, 1 M LiPF₆ (EC/DMC, in a volume ratio of 1:1) solution used as an electrolytic solution, and the assembly specification of CR2032-type button cell.
   (2) Charging and discharging cycle test included:
      performing charging and discharging under the condition of room temperature by using a constant current charging and discharging mode, where the voltage range is 2.5-4.3 V, and the current density is 100 mA/g (0.5 C rate), and the charging and discharging cycle is performed for 100 circles. In this process, the first-cycle charging specific capacity, the first-cycle discharging specific capacity, the first-cycle coulombic efficiency, and the capacity retention rate after 100 cycles of the battery were tested.

The specific test results are as shown in Table 1 and FIG. 2 below. FIG. 2 is a comparison graph showing changes in specific capacities of Example 1, when not coated and after coated, with a number of cycles.

**Table 1**

| | First-cycle charging specific capacity (mAh/g) | First-cycle discharging specific capacity (mAh/g) | First-cycle coulombic efficiency (%) | Capacity retention rate after 100 cycles (%) |
|---|---|---|---|---|
| Example 1 Uncoated | 232.7 | 198.3 | 85.2 | 61.4 |
| Example 1 Coated | 235.7 | 214.8 | 91.1 | 90.1 |
| Example 2 | 237.4 | 215.2 | 90.6 | 89.5 |
| Example 3 | 237.1 | 216.9 | 91.5 | 90.4 |
| Example 4 | 230.6 | 208.2 | 90.3 | 92.6 |
| Example 5 | 219.7 | 200.3 | 91.2 | 92.2 |
| Example 6 | 235 | 216.5 | 92.1 | 89.6 |
| Example 7 | 232.2 | 213.8 | 92.1 | 90.5 |
| Comparative Example 1 | 237.6 | 202.4 | 85.2 | 62.5 |
| Comparative Example 2 | 234.8 | 202.6 | 86.3 | 64.2 |
| Comparative Example 3 | 237.9 | 205.1 | 86.2 | 60.7 |
| Comparative Example 4 | 237.5 | 205.9 | 86.7 | 66.4 |

It can be seen from Table 1 and FIG. 2 that the modified high-nickel layered cathode material shows excellent charge and discharge capacity and cycle performance, and the coated material has higher first coulombic efficiency (> 90%). Therefore, it can be seen that the interface stability can be significantly improved by the coating layer obtained based on the topology transformation reaction.

### (3) Differential scanning calorimetry (DSC) test included:

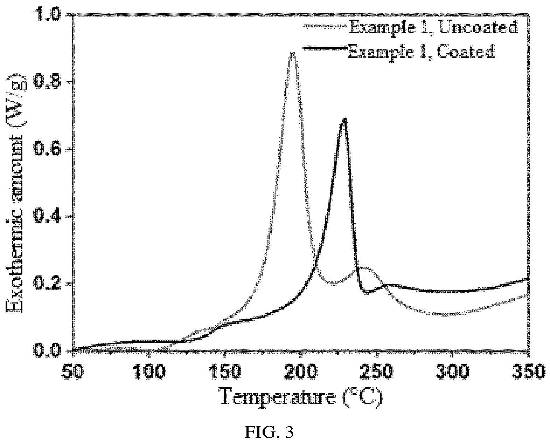

The positive electrode plate charged to 4.3 V was disassembled to obtain cathode powder, which was placed into a high-pressure crucible, added with 50 µL of electrolytic solution by dripping, heated from a room temperature to a specified temperature at a heating rate of 2 °C/min, to obtain the differential scanning calorimetry data of Comparative Examples 1 to 4 and Examples 1 to 7, as shown in Table 2 below, so as to evaluate the safety and the thermal stability of the batteries of Comparative Examples 1 to 4 and Examples 1 to 7. In addition, as shown in FIG. 3, it is a comparison graph showing differential scanning calorimetry curves of Example 1, when not coated and after coated.

**Table 2**

| | Thickness of coherent coating layer (nm) | LiOH content (wt%) | Li₂CO₃ content (wt%) | Residual lithium compound content (Li wt%) | Exothermic peak temperature tested by DSC (°C) | Exothermi c amount tested by DSC (J/g) |
|---|---|---|---|---|---|---|
| Example 1 Uncoated | - | 0.52 | 0.27 | 0.201 | 195.3 | 76.50 |
| Example 1 Coated | 40 | 0.25 | 0.17 | 0.104 | 229.1 | 44.63 |
| Example 2 | 160 | 0.23 | 0.11 | 0.089 | 242.8 | 35.77 |
| Example 3 | 62 | 0.2 | 0.12 | 0.081 | 225.4 | 41.33 |
| Example 4 | 45 | 0.21 | 0.20 | 0.097 | 253.3 | 46.55 |
| Example 5 | 118 | 0.2 | 0.10 | 0.078 | 260 | 36.71 |
| Example 6 | 46 | 0.22 | 0.16 | 0.093 | 229.6 | 50.14 |
| Example 7 | 139 | 0.17 | 0.20 | 0.088 | 224.6 | 50.69 |
| Comparative Example 1 | - | 0.48 | 0.28 | 0.192 | 205.2 | 70.13 |
| Comparative Example 2 | - | 0.36 | 0.24 | 0.149 | 210.6 | 62.49 |
| Comparative Example 3 | - | 0.57 | 0.33 | 0.227 | 200.7 | 67.63 |
| Comparative Example 4 | - | 0.32 | 0.22 | 0.134 | 213.1 | 60.31 |

It can be seen from Table 2 and FIG. 3 that: the high-nickel layered cathode material modified based on the topological transformation reaction has lower surface residual lithium compound content, and DSC tests show that the modified high-nickel layered cathode material has higher exothermic peak temperature and less heat generation, namely, the highly active oxygen is effectively inhibited from being separated out from the bulk material, and the safety of the high nickel material is improved.

Technical features in the above embodiments may be combined arbitrarily. To make the description brief, all possible combinations of various technical features in the above embodiments are not described; however, it should be considered as being within the scope of the present disclosure as long as there is no contradiction in the combinations of the technical features.

The above embodiments only illustrate several embodiments of the present disclosure, the description of which is specific and detailed, but should not be construed as limiting the scope of the present disclosure. It should be noted that various changes and modifications can be made by those skilled in the art without departing from the concept of the present disclosure, and these changes and modifications are all within the protection scope of the present disclosure. Therefore, the protection scope of the present disclosure should be determined with reference to the appended claims.

## Claims

1. A composite cathode material, **characterized by** comprising a bulk material and a coating layer,
wherein the bulk material comprises a material with a general formula of Li_{w}N1ₐCo_{b}Mn_{c}X_{1-a-b-c}O₂, wherein X comprises one or more selected from the group consisting of Al, Ti, Zr, Mg and W, 0.95≤w≤1.1, 0.6≤a≤1, b≥0, and c≥0;
the coating layer comprises a material with a general formula of Li_{α}Ni_{β}Co_{γ}Mn_{δ}O₂, wherein 0<α≤1, 0≤β≤0.6, 0≤γ≤1, 0≤δ≤1, and β, γ, and δ are not 0 at the same time; and
the bulk material and the coating layer share a coherent interface.

2. The composite cathode material according to claim 1, wherein in crystal structures of both the bulk material and the coating layer, oxygen ions are in a close-packed structure;
and/or,
a space group to which the coating layer belongs comprises one or more of *Fd-*3*m, Fm-*3*m, R-*3*m,* and *C*2/*m.*

3. The composite cathode material according to claim 1, wherein the coating layer has a thickness less than or equal to 200 nm.

4. A preparation method for the composite cathode material according to any one of claims 1 to 3, comprising:
preparing or providing the bulk material; and
mixing the bulk material with a coating additive, and preparing the composite cathode material through a topological transformation reaction.

5. The preparation method according to claim 4, wherein the mixing the bulk material with the coating additive and preparing the composite cathode material through the topological transformation reaction comprises:
mixing the bulk material and the coating additive; and
performing step-by-step calcination on a mixture obtained by mixing the two, to prepare the composite cathode material,
wherein the step-by-step calcination comprises two steps of calcination, wherein a first step of calcination is performed at a temperature of 400-600 °C for 1-5 h, a second step of calcination is performed at a temperature of 600-800 °C for 3-10 h, and the step-by-step calcination is performed in an oxygen-containing atmosphere.

6. The preparation method according to claim 4 or 5, wherein the coating additive comprises a first precursor and a reaction aid, and the first precursor comprises: one of NiₓCo_{y}Mn_{z}(OH)₂, NiₓCo_{y}Mn_{z}OOH, and NiₓCo_{y}Mn_{z}O, wherein 0≤x≤0.6, 0≤y≤1, 0 <z<1, x, y and z are not 0 at the same time;
the reaction aid comprises one or more selected from the group consisting of lithium oxide, lithium carbonate, and lithium hydroxide;
optionally, in the step-by-step calcination, the first precursor is in an oxygen close-packed structure, and the space group comprises one or more selected from the group consisting of *Fd-*3*m, Fm-*3*m, R-*3*m,* and *C*2/*m.*

7. The preparation method according to claim 6, wherein the first precursor satisfies one of following conditions:
(1) the first precursor has a specific surface area of ≥20 m²/g;
(2) a molar ratio of the first precursor to the bulk material is 0.5 mol% to 10 mol%; and
(3) a total number of metal atoms in the first precursor is M, a total number of lithium atoms in the reaction aid and in residual lithium of the bulk material is L, and the M and the L satisfy 0.8<L/M<1.2.

8. The preparation method according to claim 6, wherein the preparing the bulk material comprises:
mixing, in the oxygen-containing atmosphere, a high-nickel material precursor with a lithium salt, heating and calcining, then cooling along with a furnace, and crushing and sieving, and
optionally, the preparing the bulk material satisfies at least one of following conditions:
(1) the high-nickel material precursor comprises: one or more selected from the group consisting of an oxide and a hydroxide;
(2) the lithium salt comprises one or more selected from the group consisting of lithium carbonate and lithium hydroxide;
(3) a molar ratio of the high-nickel material precursor to lithium atoms in the reaction aid is 1.0:(0.9-1.1); and
(4) a heating rate is 2-8 °C/min, and the calcination is performed at a temperature of 700-1100 °C for 12-24 h.

9. A positive electrode plate, comprising: a positive current collector, and a positive electrode material layer formed on at least one surface of the positive current collector,
wherein the positive electrode material layer comprises the composite cathode material according to any one of claims 1 to 3 or the composite cathode material prepared by the preparation method according to any one of claims 4 to 8.

10. A battery, comprising the positive electrode plate according to claim 9.
